# EUROPEAN PATENT APPLICATION

(11) **EP 4 400 289 A1**
(43) Date of publication of application: **17.07.2024**
(21) Application number: 23382027.3
(22) Date of filing: 16.01.2023
(51) Int. Cl.: B29C 65/18, B29C 65/34, B29C 65/36, B29C 65/48, B29C 65/50, B29C 65/78, B29D 99/00, F03D 1/06, B29K 101/12

(54) **METHOD FOR MANUFACTURING A TURBINE BLADE FOR A WIND TURBINE AND TURBINE BLADE**

(71) Applicant: Siemens Gamesa Renewable Energy Innovation & Technology S.L., 31621 Sarriguren (Navarra) (ES)
(72) Inventor: March Nomen, Victor, 08194 Les Fonts (ES); Hermosilla Azanza, Iñakì, 31016 Pamplona (ES); Hierro-Olabarria Salgado, Francisco Javier, 01400 Llodio (ES)
(74) Representative: SGRE-Association

(57) **Abstract**

The present invention relates to a method for manufacturing a turbine blade (1) for a wind turbine. The method comprises:
- Manufacturing a first turbine blade part (2),
- Manufacturing a second turbine blade part (4),
- Aligning the first turbine blade part (2) with the second turbine blade part (4), and
- bonding the first turbine blade part (2) to the second turbine blade part (4) along the bonding line (6) in a thermoplastic welding process with a thermoplastic resin.

The invention also relates to a Turbine blade (1) for a wind turbine.

## Description

The present invention relates to a method for manufacturing a turbine blade for a wind turbine. The invention also relates to a turbine blade for a wind turbine.

In common production processes of turbine blades for wind turbines, a plurality of turbine blade parts is manufactured in separate production steps and merged together to form the turbine blade by a bonding process.

The turbine blade parts are usually manufactured in a molding process. In such molding processes, reinforcement material, such as fibers or the like, and resin are arranged in a mold and subjected to a curing process, usually under the provision of heat.

Subsequently, the turbine blade parts are demolded and aligned to form the turbine blade. In the aligned state, the turbine blade parts are bonded together by an adhesive. The adhesive is arranged at bonding lines between the turbine blade parts, especially in mutual contact zones.

Due to manufacturing tolerances of the turbine blade parts, such as an unwanted variation of a thickness of the turbine blade parts in the mutual contact zones, a thickness of the adhesive often varies along the bonding lines. This means that gaps between the turbine blade parts are filled with the adhesive. Moreover, since extra adhesive has to be provided to fully close all gaps, surplus adhesive may flow out of the gap and cure along the bonding line at an inner wall or outer wall of the turbine blade. Especially at the outer wall of the turbine blade, this requires an extra production step to remove the superfluous adhesive.

It is therefore the object of the present invention to eliminate or at least partially eliminate the disadvantages described above in the case of a manufacturing process for a turbine blade. In particular, it is the object of the present invention to create a turbine blade for a wind turbine and a method for manufacturing a turbine blade for a wind turbine that avoids cumbersome adhesive removal processes in a simple and inexpensive manner.

The above object is achieved by the claims. Accordingly, the problem is solved by a method for manufacturing a turbine blade for a wind turbine with the features of the independent claim 1 and by a turbine blade for a wind turbine with the features of the subordinate claim 12. Further features and details of the invention emerge from the subclaims, the description, and the drawings. Features and details that are described in connection with the method according to the invention naturally also apply in connection with the turbine blade according to the invention and vice versa, so that with regard to the disclosure of the individual aspects of the invention, reference is or can always be made to each other.

According to a first aspect of the invention, the object is achieved by a method for manufacturing a turbine blade for a wind turbine. The method comprises:
- Manufacturing a first turbine blade part with a first bonding section,
- Manufacturing a second turbine blade part with a second bonding section,
- Aligning the first turbine blade part with the second turbine blade part such that the first bonding section is adjacent to and facing the second bonding section to establish a common bonding line between the first turbine blade part and the second turbine blade part, and
- bonding the first turbine blade part to the second turbine blade part along the bonding line.

According to the invention, the bonding of the first turbine blade part to the second turbine blade part involves a thermoplastic welding process with a thermoplastic resin.

Firstly, the first turbine blade part is manufactured as a segment of the turbine blade. Preferably, the first turbine blade part is manufactured as a shell of the turbine blade. The first turbine blade part comprises the first bonding section. The first bonding section is a section of the first turbine blade part, which is configured to be connected to the second bonding section of the second turbine blade part. It is preferred that the first bonding section comprises an inverted topography compared to a topography of the second bonding section. Thus, the first turbine blade part and the second turbine blade part can be aligned such that there is no gap between the first bonding section and the second bonding section.

Moreover, the second turbine blade part is manufactured as a segment of the turbine blade. Preferably, the first turbine blade part is manufactured as a shell or a web of the turbine blade. The second turbine blade part comprises the second bonding section. The second bonding section is a section of the second turbine blade part, which is configured to be connected to the first bonding section of the first turbine blade part. It is preferred that the second bonding section comprises an inverted topography to a topography of the first bonding section. Thus, the second turbine blade part and the first turbine blade part can be aligned such that there is no gap between the second bonding section and the first bonding section.

The first turbine blade part is aligned with the second turbine blade part. The alignment is performed such that the first bonding section is adjacent to the second bonding section. Moreover, alignment is performed such that the facing the second bonding section. Preferably, the first bonding section contacts the second bonding section directly. Alternatively, a layer of resin, preferably thermoplastic resin, and/or an additional solid material, preferably mesh, strip, fibers, wires or the like, may be interposed between the first bonding section and the second bonding section. Preferably, in the aligned state, the first bonding section extends parallel to the second bonding section. By these means, gaps between the first bonding section and the second bonding section can be avoided in the aligned state. Thus, a common bonding line between the first turbine blade part and the second turbine blade part is established. The bonding line can be a closed bonding line or a bonding line with a start and an end. Furthermore, the bonding line can comprise a plurality of, especially separated, bonding lines.

According to the invention, the first turbine blade part is bonded to the second turbine blade part along the bonding line, wherein the bonding of the first turbine blade part to the second turbine blade part involves a thermoplastic welding process with a thermoplastic resin. Preferably, the thermoplastic welding process involves providing heat to the first turbine blade part, preferably at, on or near the first bonding section, and/or the second turbine blade part, preferably at, on or near the second bonding section, and/or the bonding line. A preferred target temperature of the component which is heated by the heating process lies between 150 °C and 250 °C.

It is preferred, that the thermoplastic welding process involves providing pressure of the first turbine blade part against the second turbine blade part. Furthermore, the thermoplastic welding process involves providing pressure of the bonding section against the second bonding section.

A method for manufacturing a turbine blade for a wind turbine according to the invention has the advantage over conventional methods that, in a simple and inexpensive way, a reliable bond between the first turbine blade part and the second turbine blade part is established. With the thermoplastic welding process, spillage of bonding material can be avoided. Therefore, compared to conventional adhesive-based bonding methods, no additional bonding material removal processes are necessary. Furthermore, with the thermoplastic welding process, the creation of bonding lines with a precisely defined thickness is improved significantly.

According to a preferred further development of the invention, the method can provide that a conductive material is arranged at the bonding line between the first turbine blade part and the second turbine blade part, wherein, during the thermoplastic welding process, the conductive material is heated by a heating device. Preferably, the heating device is configured as an electric or electromagnetic source device. It is preferred that the conductive material is configured as a thermally and/or electrically conductive material. The conductive material preferably comprises a metal, carbon or the like. This has the advantage that, in a simple and inexpensive way, a very balanced heating of the bonding line can be achieved. Thus, the thermoplastic welding process is further improved.

It is preferred, according to the invention, that the conductive material is provided as a mesh and/or strip and/or fiber and/or wire. In particular, an electric conductive material is provided as a mesh and/or strip and/or fiber and/or wire. It is preferred that thermoplastic resin, e.g. in the form of a mesh and/or strip and/or fiber and/or wire are intermixed with the conductive material. In the bonding process, the thermoplastic resin is softened, fused or melted by heat, thus bonding with the first turbine blade part and the second turbine blade part. Preferably, the thermoplastic resin is also bonded with the conductive material. This has the advantage that in a simple and inexpensive way, the thermoplastic welding process is improvable.

More preferred, the conductive material is provided in a pre-impregnated state with thermoplastic resin and/or that thermoplastic resin is applied onto the conductive material, which is already arranged at the bonding line. In other words, there are three preferred alternatives for introducing the thermoplastic resin to the bonding line. According to a first alternative, the conductive material is provided in the pre-impregnated state with all the thermoplastic resin, which is needed for the bonding process, already adhering to the conductive material. The first alternative has the advantage that the dosage of the thermoplastic resin can be shifted to a pre-production area and the final manufacturing of the turbine blade can be simplified. According to a second alternative, the conductive material is provided in the pre-impregnated state with a part of the thermoplastic resin, which is needed for the bonding process, already adhering to the conductive material. When the impregnated conductive material is arranged at the bonding line, the missing thermoplastic resin is injected into the conductive material. The second alternative has the advantage that minor thickness tolerances of the first turbine blade part and the second turbine blade part can be compensated for by the additional thermoplastic resin. According to a third alternative, the conductive material is provided at the bonding line in a dry state. Subsequently, the thermoplastic resin is injected into the conductive material. The third alternative has the advantage that the provision of excess thermoplastic resin can be better avoided. This has the advantage that, in a simple and inexpensive way, the bonding of the first turbine blade part to the second turbine blade part can be further improved.

In a particularly preferred embodiment, the conductive material is arranged at the bonding line and interposed between the first turbine blade part and the second turbine blade part and/or that the conductive material is arranged at the bonding line and aside from the first turbine blade part and the second turbine blade part. In other words, it is preferred that the conductive material is arranged at the bonding line between the first bonding section and the second bonding section. Alternatively or additionally, the conductive material can be arranged on one or two sides of the bonding line. This has the advantage that, in a simple and inexpensive way, the bonding of the first turbine blade part to the second turbine blade part can be further improved.

Preferably, for manufacturing the first turbine blade part, a mold is provided, wherein reinforcement material and foam pieces are arranged in the mold and cured with resin. The reinforcement material preferably comprises carbon, aramid or glass and can be provided as a mesh, fiber, strip, wire or the like. It is preferred that a thermoplastic resin is used. Furthermore, as preferred, for manufacturing the second turbine blade part, a mold is provided, wherein reinforcement material and foam pieces are arranged in the mold and cured with resin. The reinforcement material preferably comprises carbon, aramid or glass and can be provided as a mesh, fiber, strip, wire or the like. It is preferred that a thermoplastic resin is used. This has the advantage that in a simple and inexpensive way, the manufacturing process of the turbine blade can be further improved.

According to a preferred embodiment of the invention, a pressure jig is provided at the mold, wherein the first bonding section is pressed against the mold by the pressure jig. Preferably, the pressing is performed such that the pressure jig has a defined distance to the mold at the first bonding section. By these means, the thickness of the first bonding section can be controlled precisely. Preferably, the pressure is focused on the first bonding section. This means that at least one area next or around the first bonding section is preferably not applied with pressure. Furthermore, as preferred, the second bonding section is pressed against the mold by a pressure jig. Preferably, the pressing is performed such that the pressure jig has a defined distance to the mold at the second bonding section. By these means, the thickness of the second bonding section can be controlled precisely. Preferably, the pressure is focused on the second bonding section. This means that at least one area next or around the second bonding section is preferably not applied with pressure. By providing the pressure at the bonding sections, material, especially thermoplastic resin, can be dislocated from the bonding section or compacted within the bonding section. This has the advantage that in a simple and inexpensive way, the manufacturing tolerances of the first bonding section and the second bonding section can be further reduced. By these means, the quality of the bonding between the first turbine blade part and the second turbine blade part can be further improved.

It is particularly preferred when the pressure jig is heated. It is preferred that the part of the pressure jig, which is contacting the first bonding section, is heated to improve a heat transfer to the thermoplastic resin. Further preferred, the part of the pressure jig, which is contacting the second bonding section, is heated to improve a heat transfer to the thermoplastic resin. Preferably, the pressure is applied by the pressure jig before the thermoplastic material is cured. Alternatively, the pressure can be applied by the pressure jig when the thermoplastic material is already cured, thereby the thermoplastic material is softened, fused or melted. This has the advantage that in a simple and inexpensive way, manufacturing tolerances of the first bonding section and the second bonding section can be further reduced. By these means, the quality of the bonding between the first turbine blade part and the second turbine blade part can be further improved.

It is preferred, according to the invention, that a pressure roller is provided at the mold, wherein the pressure roller is heated and the first bonding section is pressed against the mold by rolling the heated pressure roller along the first bonding section. Preferably, the pressure roller or a further pressure roller is heated and the second bonding section is pressed against the mold by rolling the heated pressure roller along the second bonding section. For both cases, the pressure roller can be provided at a rail system, a robot arm or the like. The pressure roller is configured to apply the pressure with a predefined distance to the mold to guarantee a predetermined thickness of the bonding section. Preferably, the pressure roller is used before the thermoplastic material is cured. This has the advantage that in a simple and inexpensive way, manufacturing tolerances of the first bonding section and the second bonding section can be further reduced. By these means, the quality of the bonding between the first turbine blade part and the second turbine blade part can be further improved.

Further preferred, the first bonding section is pressed against the mold by rolling the heated pressure roller along the first bonding section after the first turbine blade part is cured or polymerized. Preferably, the second bonding section is pressed against the mold by rolling the heated pressure roller along the second bonding section after the second turbine blade part is cured or polymerized. This has the advantage that, in a simple and inexpensive way, manufacturing tolerances of the first bonding section and the second bonding section can be further reduced. By these means, the quality of the bonding between the first turbine blade part and the second turbine blade part can be further improved.

It is further preferred that a third turbine blade part with a third bonding section is provided, wherein the third bonding section is aligned with the first bonding section of the first turbine blade part and the second bonding section of the second turbine blade part, and wherein the third turbine blade part is bonded to the first turbine blade part and the second turbine blade part in a thermoplastic welding process. In this preferred embodiment, the first bonding section comprises a section for the bonding to the second bonding section and another section for bonding to the third bonding section. The second bonding section comprises a section for the bonding to the first bonding section and another section for bonding to the third bonding section. The third bonding section comprises a section for the bonding to the first bonding section and another section for bonding to the second bonding section. It is preferred that all bonding sections are manufactured with a jig and/or pressure roller to provide turbine blade parts with reduced tolerances, especially a more precisely defined thickness of the bonding sections. This has the advantage that in a simple and inexpensive way, a turbine blade with improved stability can be produced.

Preferably, the first turbine blade part is configured as a first shell of the wind turbine blade. Preferably, the second turbine blade part is configured as a second shell of the wind turbine blade. Preferably, the third turbine blade part is configured as a web of the wind turbine blade. The web is preferably arranged inside a blade chamber constituted by the first shell and the second shell.

According to a second aspect of the invention, the object is achieved by a turbine blade for a wind turbine. The turbine blade comprises a root section, an intermediate section, and a tip section. According to the invention, the turbine blade is manufactured by a method according to the invention.

The turbine blade according to the invention has all the advantages that have already been described for a method for manufacturing a turbine blade for a wind turbine according to the first aspect of the invention. Accordingly, the turbine blade according to the invention has the advantage over conventional turbine blades that in a simple and inexpensive way, a turbine blade with a reliable bonding between the first turbine blade part and the second turbine blade part is provided. With the thermoplastic welding process, spilling of bonding material has be avoided. Therefore, compared to conventional adhesive-based bonding methods, no additional bonding material removal processes were necessary for manufacturing the turbine blade. Furthermore, due to the thermoplastic welding process, the bonding lines of the turbine blade have a precisely defined thickness.

Further advantages, features, and details of the invention unfold from the following description, in which, by reference to drawings, working examples of the present invention are described in detail. Therefore, the features from the claims as well as the features mentioned in the description can be essential for the invention as taken alone or in an arbitrary combination. In the drawings:
Figure 1 shows a schematic sectional view of a turbine blade according to a preferred embodiment of the invention,
Figure 2 shows a schematic sectional view of a manufacturing process of the first turbine blade part according to a preferred first embodiment of the invention,
Figure 3 shows a schematic perspective view of the manufacturing process of figure 2,
Figure 4 shows a schematic perspective view of a manufacturing process of the first turbine blade part according to a preferred second embodiment of the invention,
Figure 5 shows a schematic side view of a pressure roller process according to the preferred second embodiment of the invention, and
Figure 6 shows a method for manufacturing a turbine blade for a wind turbine according to a preferred embodiment of the invention in a schematic process chart.

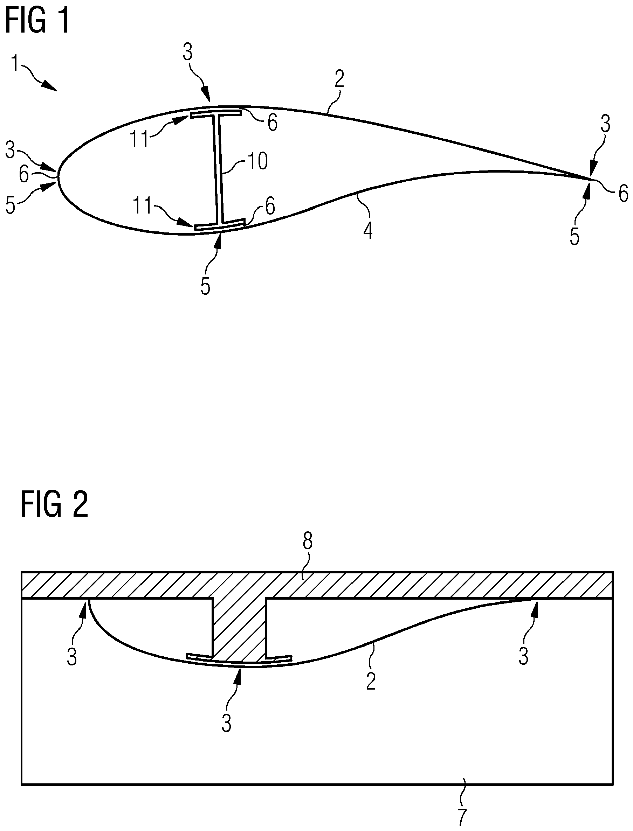

Elements with the same function and effectiveness are denoted in figures 1 to 6 with the same reference numbers.

In fig. 1, a schematic sectional view of a turbine blade 1 according to a preferred embodiment of the invention is shown. The turbine blade 1 comprises a first turbine blade part 2, configured as a first shell, a second turbine blade part 4, configured as a second shell, and a third turbine blade part, configured as a web. The first turbine blade part 2 comprises a first bonding section 3 at side end areas and in an intermediate area of the first turbine blade part 2. The second turbine blade part 4 comprises a second bonding section 5 at side end areas and in an intermediate area of the second turbine blade part 4. The third turbine blade part 10 comprises a third bonding section 11 at an - in this figure - upper end and lower end. The first bonding section 3 is bonded to the second bonding section 5 and the third bonding section 11 along a bonding line 6. Moreover, the second bonding section 5 is bonded to the third bonding section 11 along a bonding line 6.

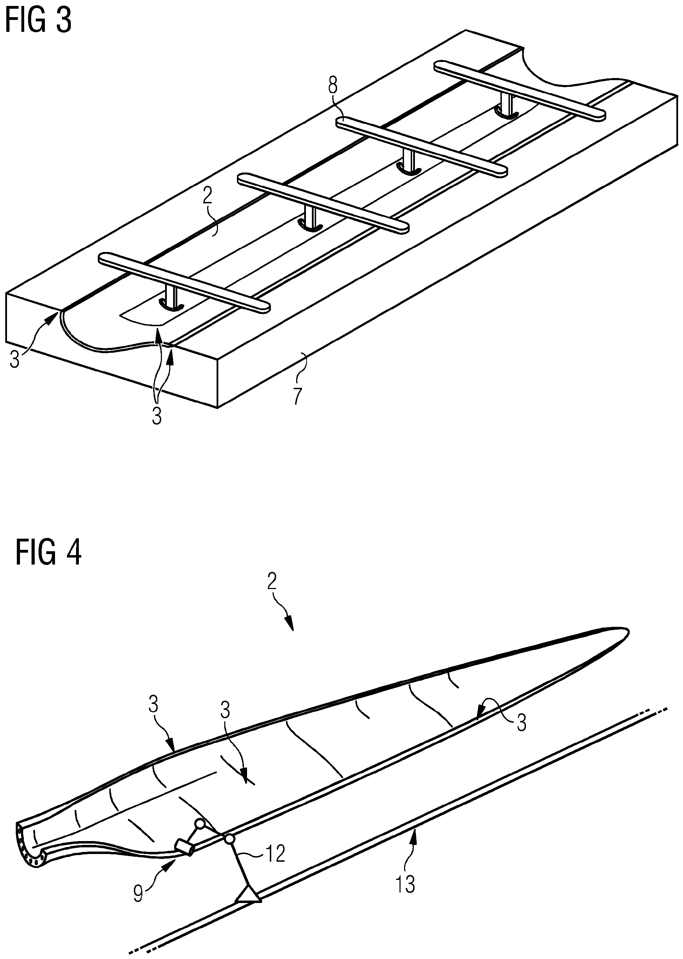

Fig. 2 shows a manufacturing process of the first turbine blade part 2 according to a preferred first embodiment of the invention. In fig. 3, a schematic perspective view of the manufacturing process of fig. 2 is shown. In this manufacturing process, the first turbine blade part 2 is arranged inside a mold 7 for manufacturing the first turbine blade part 2. At the mold 7, a pressure jig 8 is provided. The pressure jig 8 provides pressure against the first bonding section 3 of the first turbine blade part 2, thereby pressing the first bonding section 3 against the mold 7. Preferably, the pressure jig 7 is heated by a not shown heating device. Preferably, this process is performed after the thermoplastic resin of the first turbine blade part 2 has been cured. By introducing heat, the thermoplastic resin is softened. By these means and due to the dimensions of the jig 7 and the pressure jig 8, the first bonding section 3 of the first turbine blade part 2 comprises a precisely defined thickness. This is advantageous for a thermoplastic welding process. Therefore, it is preferred that the second turbine part 4 is manufactured likewise.

Fig. 4 shows a schematic perspective view of a manufacturing process of the first turbine blade part 2 according to a preferred second embodiment of the invention is shown. In this manufacturing process, the first turbine blade part 2 is provided at a not shown mold 7, holding jig or the like. Moreover, a pressure roller 9 is provided. The pressure roller 9 is arranged on a robot arm 12, which is guided along a guide rail 13. Preferably, the robot arm 12 can be operated by a not shown control device to provide an exact relative position of the pressure roller 9 to the first turbine blade part 2 while pressing the pressure roller 9 against the first bonding section 3 and moving the pressure roller 9 along the first bonding section 3. Thus, a precisely defined thickness of the first bonding section 3 can be achieved. Preferably, the pressure roller 9 is heated by a not shown heating device. Preferably, this process is performed after the thermoplastic resin of the first turbine blade part 2 has been cured. By introducing heat, the thermoplastic resin is softened.

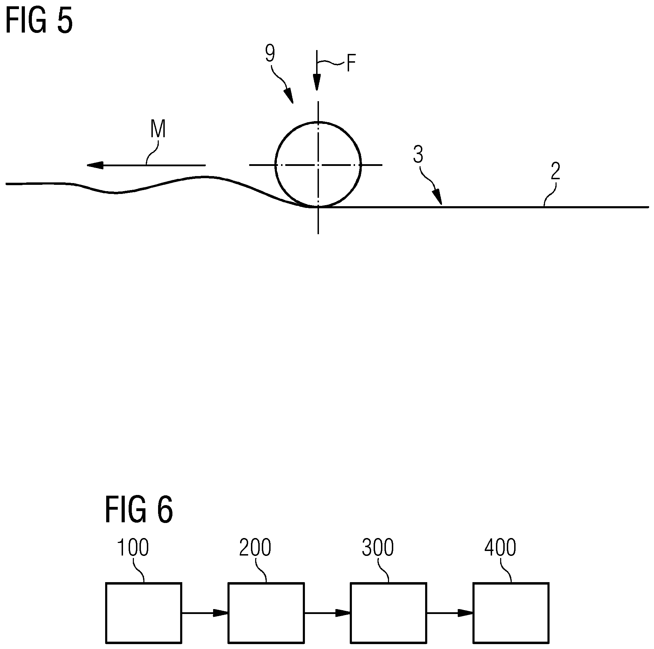

In fig. 5, a schematic side view of a pressure roller 9 process according to the preferred second embodiment of the invention is shown. The pressure roller 9 is pressed against the first bonding section 3 of the first turbine blade part 2 with a force F and moved in a moving direction M along the first bonding section 3. Therefore, manufacturing tolerances of the first bonding section 3 are reduced.

Fig. 6 shows a method for manufacturing a turbine blade 1 for a wind turbine according to a preferred embodiment of the invention in a schematic process chart. In a first method action 100, a first turbine blade part 2 with a first bonding section 3 is manufactured. Alternatively, a previously manufactured first turbine blade part 2 can be provided from stock. In a second method action 200, a second turbine blade part 4 with a second bonding section 5 is manufactured. Alternatively, a previously manufactured second turbine blade part 4 can be provided from stock. Optionally, a third turbine blade part 10 with a third bonding section 11 is manufactured or provided from stock.

In a third method action 300, the first turbine blade part 2 is aligned with the second turbine blade part 4 such that the first bonding section 3 is adjacent to and facing the second bonding section 5 to establish a common bonding line 6 between the first turbine blade part 2 and the second turbine blade part. Preferably, the third turbine blade part 10 is aligned with the first turbine blade part 2 and the second turbine blade part 4 such that the first bonding section 3 is adjacent to and facing the third bonding section 11 to establish a common bonding line 6 between the first turbine blade part 2 and the third turbine blade part 10 and that the second bonding section 5 is adjacent to and facing the third bonding section 11 to establish a common bonding line 6 between the second turbine blade part 4 and the third turbine blade part 10.

In a fourth method action 400, the first turbine blade part 2 is bonded to the second turbine blade part 4 along the bonding line 6. Preferably, the third turbine blade part 10 is bonded to the first turbine blade part 2 along the bonding line 6 and to the second turbine blade part 4 along the bonding line 6. The bonding of the first turbine blade part 2 to the second turbine blade part 4 involves a thermoplastic welding process with a thermoplastic resin. Preferably, the bonding of the first turbine blade part 2 to the third turbine blade part 10 involves a thermoplastic welding process with a thermoplastic resin. Further preferred, the bonding of the second turbine blade part 4 to the third turbine blade part 10 involves a thermoplastic welding process with a thermoplastic resin.

## Claims

1. Method for manufacturing a turbine blade (1) for a wind turbine, comprising:
- Manufacturing a first turbine blade part (2) with a first bonding section (3),
- Manufacturing a second turbine blade part (4) with a second bonding section (5),
- Aligning the first turbine blade part (2) with the second turbine blade part (4) such that the first bonding section (3) is adjacent to and facing the second bonding section (5) to establish a common bonding line (6) between the first turbine blade part (2) and the second turbine blade part (4), and
- bonding the first turbine blade part (2) to the second turbine blade part (4) along the bonding line (6),
**characterized in,**
**that** the bonding of the first turbine blade part (2) to the second turbine blade part (4) involves a thermoplastic welding process with a thermoplastic resin.

2. Method according to claim 1,
**characterized in,**
**that** a conductive material is arranged at the bonding line (6) between the first turbine blade part (2) and the second turbine blade part (4), wherein, during the thermoplastic welding process, the conductive material is heated by a heating device.

3. Method according to claim 2,
**characterized in,**
**that** the conductive material is provided as mesh and/or strip and/or fiber and/or wire.

4. Method according to claim 2 or 3,
**characterized in,**
**that** the conductive material is provided in a pre-impregnated state with thermoplastic resin and/or that thermoplastic resin is applied onto the conductive material, which is already arranged at the bonding line (6).

5. Method according to any of the claims 2 to 4,
**characterized in,**
**that** the conductive material is arranged at the bonding line (6) and interposed between the first turbine blade part (2) and the second turbine blade part (4) and/or that the conductive material is arranged at the bonding line (6) and aside the first turbine blade part (2) and the second turbine blade part (4).

6. Method according to any of the previous claims,
**characterized in,**
**that** for manufacturing the first turbine blade part (2), a mold (7) is provided, wherein reinforcement material and foam pieces are arranged in the mold (7) and cured with resin.

7. Method according to claim 6,
**characterized in,**
**that** a pressure jig (8) is provided at the mold (7), wherein the first bonding section (3) is pressed against the mold (7) by the pressure jig (8).

8. Method according to claim 7,
**characterized in,**
**that** the pressure jig (8) is heated.

9. Method according to any of claims 6 to 8,
**characterized in,**
**that** a pressure roller (9) is provided at the mold (7), wherein the pressure roller (9) is heated and the first bonding section (3) is pressed against the mold (7) by rolling the heated pressure roller (9) along the first bonding section (3) .

10. Method according to claim 9,
**characterized in,**
**that** the first bonding section (3) is pressed against the mold (7) by rolling the heated pressure roller (9) along the first bonding section (3) after the first turbine blade part (2) is cured or polymerized.

11. Method according to any of the previous claims,
**characterized in,**
**that** a third turbine blade part (10) with a third bonding section (11) is provided, wherein the third bonding section (11) is aligned with the first bonding section (3) of the first turbine blade part (2) and the second bonding section (5) of the second turbine blade part (4), and wherein the third turbine blade part (10) is bonded to the first turbine blade part (2) and the second turbine blade part (4) in a thermoplastic welding process.

12. Turbine blade (1) for a wind turbine, comprising a root section, an intermediate section and a tip section,
**characterized in,**
**that** the turbine blade (1) is manufactured by a method according to any of the previous claims.
